# EUROPÄISCHE PATENTSCHRIFT

(11) **EP 2 025 706 B1**
(45) Veröffentlichungstag und Bekanntmachung des Hinweises auf die Patenterteilung: **10.08.2011**
(21) Anmeldenummer: 08011764.1
(22) Anmeldetag: 30.06.2008
(51) Int. Cl.: C08J 7/04, B60R 5/04

(54) **Verwendung eines Schichtaufbaus als Rollomaterial für eine Laderaumabdeckung**
Use of a layer composition as roller material for a storage space covering
Utilisation d'une structure en couche en tant que matériau de store pour un recouvrement de l'espace de chargement

(30) Priorität: 24.07.2007 DE 102007034376
(43) Veröffentlichungstag der Anmeldung: 18.02.2009
(73) Patentinhaber: Era Beschichtung GmbH & Co. KG, 31592 Stolzenau (DE)
(72) Erfinder: Noack, Kurt-Michael, 31592 Stolzenau (DE)
(74) Vertreter: Scholz, Volker

(56) Entgegenhaltungen:
- EP-A- 1 433 660
- WO-A-2006/074424
- WO-A-2006/092227

## Beschreibung

Die vorliegende Erfindung betrifft eine Verwendung eines Schichtaufbaus als Rollomaterial für eine Laderaumabdeckung.

Sichtschutzrollomaterialien für Automobilanwendungen werden üblicherweise in Laderaumabdeckungen verwendet. Diese Materialien beinhalten in der Regel einen Träger und mindestens eine Beschichtung auf der Vorderseite, die als einseitige Deckschicht dient. Im Regelfall weisen jedoch sowohl Vorder- als auch Rückseite des Trägers eine Beschichtung auf, die vorzugsweise aus Polyvinylchlorid, Polyurethan oder Polyolefin (Polypropylen) hergestellt ist.

Als Trägermaterialien werden bislang ausschließlich textile Materialien eingesetzt, insbesondere textile Gewebe.

Bei Einsatz dieser Gewebematerialien besteht ein Hauptproblem darin, dass die verwendeten Gewebematerialien eine ausgeprägte Struktur aufweisen, das Rollomaterial jedoch eben sein muß bzw. mit einer gewünschten Struktur zur visuellen Gestaltung versehen wird, was beispielsweise Narben mit lederartiger oder technisch orientierter Struktur sein können.

Bei den bekannten Rollomaterialien ist es ferner üblich, noch eine Lackschicht auf die Deckschicht zum Verschleißschutz und zur Glanzgradeinstellung aufzubringen.

Ein wesentlicher Nachteil des bekannten und oben beschriebenen Schichtaufbaus ist, dass ein möglichst ebener Materialaufbau als Zielstellung für das fertige Rollomaterial oder als unabdingbare Grundlage für eine nachträgliche Oberflächengestaltung - über eine Narbung oder einen Lackauftrag - eine erhebliche Materialmenge der Beschichtung allein zur Einebnung der Trägerstruktur benötigt. Diese Beschichtungsmaterialmenge bildet dann einen erheblichen Anteil der Gesamtdicke aus. Ein weiterer Nachteil besteht darin, dass in einem Gewebeträger durch seine uneingeschränkte Flexibilität keine erwünschte Oberflächenstruktur zu fixieren ist, so dass dieser Schichtanteil für eine gezielte Oberflächenprofilierung durch Narbung nicht nutzbar ist, was wiederum durch eine dickere Beschichtungsschicht ausgeglichen werden muß. Aus diesen nachteiligen Eigenschaften der Konstruktion ergibt sich ein erheblicher Materialverbrauch an Beschichtungsmaterial, was wirtschaftlich umso kritischer wird, wenn besonders hochwertige Beschichtungsmaterialien, wie beispielsweise Polyurethan, erforderlich sind.

Ein weiterer erheblicher Nachteil liegt vor, wenn räumliche Begrenzungen im Anwendungsbereich besonders dünne Rollomaterialien nahe legen, z.B. als Sichtschutzrollos in Seitenfenstern. Hier ergibt sich zudem der Nachteil, dass übliche Gewebeträger für ein angemessenes Festigkeitsniveau nur in einer eigentlich unverhältnismäßig hohen Mindestschichtdicke verfügbar sind. Ferner weisen die bekannten Rollostrukturen ein unangemessen hohes Gewicht auf. Besonders das hohe Flächengewicht des Beschichtungsmaterials erzeugt als Nebeneffekt bei den üblichen Automobilprüfungen - z.B. gravimetrisches Fogging, VDA 278 - erhebliche Emissionen, besonders bei Einsatz weichmacherhaltiger Materialien.

Soll eine Wasser- oder Wasserdampfundurchlässigkeit oder sogar eine Gasdichtheit bei besonderen, in sich geschlossenen Einsatzmaterialien angestrebt werden, ist das mit üblichen Gewebeträgern problematisch, da dies nur mit einer aufwendigen funktionellen Beschichtung möglich ist.

Ein weiteres Problem bei der Anwendung von Gewebeträgern von Rollomaterialien ist das vielstufige Herstellungsverfahren, das einerseits die Wirtschaftlichkeit beeinträchtigt und andererseits Materialstreuungen und Inhomogenitäten erzeugt, die zusätzlich durch teilweise unterschiedliche Roh- und Zwischenprodukte noch verstärkt werden. So können z.B. Garne mit unterschiedlichem Schrumpfverhalten die Planlage nach der thermischen Belastung beim Beschichtungsvorgang erheblich beeinträchtigen. Oft werden zudem undefinierte Hilfsstoffe, z.B. Schlichten, eingetragen, die sich bei der nachträglichen Beschichtung als kritisch erweisen.

Ferner ist es bei den bekannten Rollos auf Basis von Gewebematerialien nachteilig, dass diese nicht zu einer im wesentlichen vollständigen Lichtundurchlässigkeit geeignet sind, insbesondere wenn eine dünne Ausführung angestrebt wird, so dass ein gewünschter Sichtschutz durch insbesondere wenn eine dünne Ausführung angestrebt wird, so dass ein gewünschter Sichtschutz durch Einsatz einer Laderaumabdeckung, beispielsweise in einem Kombi-Fahrzeug, nicht zufrieden stellend gewährleistet werden kann.

Es ist daher eine Aufgabe der Erfindung, einen Schichtaufbau bereitzustellen, der als Rollomaterial für eine Laderaumabdeckung verwendet werden kann und die oben aufgeführten Nachteile des Stands der Technik überwindet.

Die Aufgabe der Erfindung wird gelöst durch die Verwendung eines lichtundurchlässigen Schichtaufbaus nach Anspruch 1.

Als Rollo sollen erfindungsgemäß übliche Rollvorrichtungen oder funktionell gleichartig verwendbare Flächengebilde in ähnlichen, auszugsfähigen Anordnungen verstanden werden, beispielsweise gefaltete bzw. faltbare Vorrichtungen, die der Funktion eines Rollomaterials gleichen bzw. nahe kommen.

Weiterhin ist vorgesehen, dass die thermoplastische Kunststofffolie ausgewählt wird aus Polyesterfolie, Polyamidfolie und Polycarbonatfolie.

Besonders bevorzugt ist vorgesehen, dass die Folie aus Polyethylenterephthalat ist.

In einer weiteren Ausführungsform wird vorgeschlagen, dass die thermoplastische Kunststofffolie eine Dicke von 0,010-0,25 mm, bevorzugt 0,025-0,125 mm, ist.

Eine besonders bevorzugte Ausführungsform ergibt sich bei Verwendung eines Schichtaufbaus, bei dem der Träger beidseitig mit Haftstrich und Oberstrich versehen ist. Bevorzugt ist dann auch, dass auf beide Seiten eine Lackschicht aufgetragen wird.

Desweiteren ist bevorzugt vorgesehen, dass der Oberstrich in einer Menge von 50-400 g/m², bevorzugt 50-120 g/m² aufgebracht ist.

Besonders bevorzugt ist, dass das Oberstrichmaterial ausgewählt ist aus Weich-Polyvinylchlorid (Weich-PVC), Polyurethan und, optional modifiziertem, Polyolefin.

Weiterhin ist vorgesehen, dass der Haftstrich in einer Menge von 30-90 g/m² aufgetragen ist.

In einer Ausführungsform ist vorgesehen, dass die Lackschicht in einer Menge von 8-30 g/m² aufgetragen ist.

In einer weiteren Ausführungsform ist vorgesehen, dass ein Haftstrich und optional darauf ein Oberstrich und/oder eine Lackschicht auf der Rückseite des Trägers aufgetragen ist bzw. sind.

Besonders bevorzugt ist vorgesehen, dass die zumindest eine Lackschicht eine Dicke von 4-20 µm aufweist.

Desweiteren ist bevorzugt vorgesehen, dass zumindest zwei Trägerfolien über einen zumindest auf einer Trägerfolie aufgetragenen Haftstrich miteinander thermisch laminiert sind.

Schließlich wird vorgeschlagen, dass der Schichtaufbau auf zumindest einer Oberseite eine Narbung aufweist.

Überraschend wurde erfindungsgemäß festgestellt, dass Rollomaterialien vorteilhaft eingesetzt werden können, wenn diese Rollomaterialien einen Schichtaufbau mit einer oder mehreren ebenen bzw. glatten Trägerfolien aufweisen, die für geeignete spätere Detailstrukturen (z.B. Narbbildung) ausreichend starr sind und zumindest im Bereich üblicher Prägebedingungen ein zumindest teilweises thermoplastisches Verhalten zeigen. Bevorzugte Prägetemperaturen liegen hier zwischen 150 und 190°C bei einer Liniendruckbelastung zwischen 3 und 10 Tonnen. Eine solche Trägerfolie kann auf einfache Weise mit einem Haftstrich versehen werden, auf den dann zusätzlich eine strukturierbare Lackschicht aufgebracht werden kann.

Ebenfalls hat sich überraschend gezeigt, dass der beschriebene Schichtaufbau lichtundurchlässig unter Anwendung einer wesentlich geringeren Gesamtschichtdicke ausgestaltet werden kann, somit einen zuverlässigen Sichtschutz bei Verwendung als eine Laderaumabdeckung bietet.

Als besonders geeignet haben sich erfindungsgemäß Polyesterfolien erwiesen, insbesondere Polyethylenterephthalat, die mit den üblicherweise eingesetzten Geweben (beispielsweise Polyestergewebe) hinsichtlich der Gebrauchseigenschaften vergleichbar sind.

Erfindungsgemäß eingesetzte Folien zur Erstellung des Schichtaufbaus weisen eine absolut ebene Oberfläche auf und sind in einem breiten Dickenbereich von 0,010-0,25 mm verfügbar. Bevorzugt sind Dicken von 0,025-0,125 mm, während übliche Gewebedicken von 0,12-0,30 mm reichen. Durch den geschlossenen Aufbau der Trägerfolien sind trotz deutlich geringerer Dicke vergleichbare Festigkeiten erzielbar, so dass dementsprechend eine deutliche Dickenreduktion bei gleichen Eigenschaften möglich ist.

Eine weitere Dickenreduktion und Einsparung an Beschichtungsmaterial ergibt sich daraus, dass eine Einebnung der Trägerfolie nicht erforderlich ist. Dadurch wird ein ganzflächiger Lackauftrag über einfache Raster- oder Siebdruckwalzen problemlos möglich, ferner sind Untergrundstrukturen für das spätere Prägen zur Ausbildung der Narbenstruktur sicher ausgeschlossen, was eine besonders saubere Narbenstruktur gewährleistet. Ferner sind Moiree-Effekte ausgeschlossen, d.h. die optische Überlagerung zweier untergeordneter Oberflächenstrukturen zu einem neuen (unerwünschten) Oberflächenbild.

Übliche Polyesterfolien sind im beschränkten Maße thermoverformbar, d.h. mit den für übliche mit Gewebeträger armierte Rollomaterialien angepassten Prägebedingungen lassen sich einfache technische Narben vollständig abbilden, bei komplizierten Ledernarben ist das zumindest im Rahmen einer Grobstruktur möglich, wohingegen für die Abbildung einer Feinststruktur die Auftragung des Haftstrichs und der Lackschicht erforderlich ist. Bei den erfindungsgemäß eingesetzten Folienmaterialien kann zudem eine vollständige Durchformung, die sich bis auf die Rückseite erstreckt, erzielt werden, dadurch kann die Trägerfolie in idealer Form zur Narbausformung mit verwendet werden, was ein erhebliches Potential für eine Dickenreduzierung und Mengenreduzierung des erforderlichen Beschichtungsmaterial erschließt.

Erfindungsgemäß wurde festgestellt, dass bei erfindungsgemäßer Verwendung des Schichtaufbaus Gewichtseinsparungen und Dickeneinsparungen von etwa 60% im Vergleich zur Verwendung eines Gewebeträgers erzielen lassen.

Ferner lagen gravimetrische Foggingwerte unterhalb von 0,5 mg. Eine Erfüllung der Vorgaben der VDA 278 können durch die geringen Mengen an Beschichtungsmaterial, sogar mit einem an sich kritischen Werkstoff wie PVC, erzielt werden.

Übliche Polyesterfolien sind ferner absolut wasserdicht und im üblichen Rahmen sogar als gasdicht zu bewerten.

Ferner wird abschließend im Herstellungsverfahren des Schichtaufbaus eine besondere Stabilität erzielt, da die an rauen Gewebeoberflächen üblichen Lufteinflüsse hier minimiert werden können.

Neben der Trägerfunktion der erfindungsgemäß verwendeten Folien ist darauf hinzuweisen, dass solche Folien ebenfalls eine Sperrfunktion gegebenüber dem Haftstrich, dem Oberstrich und der Lackschicht aufweisen können. Das ist besonders dann von Vorteil, wenn z.B. eine Weichmachermigration in Kontaktmaterialien ausgeschlossen werden soll. So ergibt sich im Verbau mit Polyurethanen - z.B. Schäumen - ein deutlich unempfindlicheres Material bei Dauerwärmelagerung, da ein Transport von Abbauprodukten über Weichmachermigration durch diese Barriere wirksam unterbunden werden kann. Gleichzeitig ist ein wirksamer Schutz gegen abrasive Beanspruchungen erzielbar. Durch die Barrierewirkung können ebenfalls Emissionen wirksam unterdrückt werden.

Weitere Merkmale und Vorteile der vorliegenden Erfindung ergeben sich aus der folgend detaillierten Beschreibung von bevorzugten Ausführungsbeispielen.

### Ausführungsbeispiel 1

Zur Erstellung einer üblichen Laderaumabdeckung eines Kombifahrzeugs wird ein Rollomaterial unter Verwendung einer Polyesterfolie mit einer Dicke von 0,075 mm als Träger hergestellt. Eine besondere Eignung ergibt sich ebenfalls für Trägerfolien mit einer Dicke von 0,050 mm bis 0,10 mm. Für das vorliegende Ausführungsbeispiel wurde die Folie HOSTAPHAN SL75^{®} eingesetzt. Zunächst wird auf diese Trägerfolie auf der Oberseite derselben mit einem üblichen Messerrakel ein Haftstrich aufgebracht. Der pastenförmige Haftstrich umfasst etwa 30-60 Gew.-% Polyvinylchlorid, 25-55 Gew.-% Weichmacher und 1-15 Gew.-% eines Haftvermittlersystems aus einem vorpolymerisierten Isocyanat und einem mindestens difunktionellen, vorzugsweise polyfunktionellen Polyol, 0,5-7,0 Gew.-% Stabilisator sowie ggf. Pigmente und Flammschutzmittel sowie Füllstoffe. Die Auftragsmenge wird in einem Bereich von 30-90 g/m² gewählt. Die Gelierung erfolgt in einem üblichen Trockenkanal bei einer effektiven Temperatur von 140-160°C. An einem weiteren Streichkopf wird dann auf diesen Haftstrich ein pastenförmiger PVC-Oberstrich aufgetragen, der 30-60 Gew.-% PVC, 25-55 Gew.-% Weichmacher, 0,5-7 Gew.-% Stabilisator, 2-15 Gew.-% Pigmente, 0-20 Gew.-% Flammschutzmittel sowie übliche Prozeßhilfsstoffe und ggf. Füllstoffe enthält. Die Auftragsmenge des Oberstrichs wird im Bereich von 50-400 g/m², besonders bevorzugt im Bereich von 50-120 g/m², ausgewählt.

Die Gelierung des Oberstrichs erfolgt in einem weiteren Trockenkanal bei einer effektiven Temperatur von 140-160°C. Unmittelbar anschließend an die Gelierung erfolgt die Auftragung einer Lackschicht, mit einem geeigneten Wasserlack und einer Naßauflage von 8-30 g/m². Die Rückseite der Trägerfolie wird ebenfalls mit einem Haftstrich und einer Lackschicht versehen. Der so hergestellte Schichtaufbau zeigt selbst bei Auftragsmengen im unteren, oben angegebenen Bereich eine absolut ebene Oberfläche. Bei besonderen Anforderungen kann auch die Rückseite der Trägerfolie mit dem oben genannten Oberstrich beschichtet werden.

Im nachfolgenden Arbeitsschritt wird das Material mit einer technischen Narbe geprägt, die im Automobilbereich als typisch gilt. Auch bei Auftragsmengen der Schichten im unteren, oben angegebenen Bereich konnte eine vollständige Narbausbildung erzielt werden. Dabei wird bereits ein wesentlicher Narbanteil im Träger fixiert. Durch die Anwendung des Haftvermittlers wird eine ausreichende Haftung der Beschichtung an der Trägerfolie sichergestellt. Die PVC-Beschichtung sichert wie bei trägerarmierten Materialien die übliche Weiterverarbeitung über HF-Verschweißung oder Verklebung.

### Ausführungsbeispiel 2 (Referenz)

Ein Rollomaterial wurde wie in Ausführungsbeispiel 1 beschrieben hergestellt, jedoch unter Verzicht eines Oberstrichs. Hier konnte bereits durch geeignete Auslegung der Haftstrichschicht unter Mitausnutzung der Thermoverformbarkeit der Trägerfolie eine ausreichende Narbausbildung erzielt werden.

### Ausführungsbeispiel 3

Ein Rollomaterial wurde wie in den Ausführungsbeispielen 1 oder 2 beschrieben hergestellt, jedoch wurde anstelle der Rückseitenbeschichtung ein stark pigmentierter, dickschichtiger Lack (Dicke etwa 4 bis 20 µm Trockenschichtdicke) aufgetragen, mit einem geeigneten Haftvermittlersystem, wobei die Vorderseitenfarbe eingestellt wird. Die Weiterverarbeitung dieses Rollomaterials erfolgt vorzugsweise über ein Verkleben.

### Ausführungsbeispiel 4

Ein Rollomaterial wurde ähnlich zum Ausführungsbeispiel 3 hergestellt, wobei jedoch beide Oberflächenseiten eine dickschichtige Lackschicht (Dicke etwa 4-20 µm Trockenschichtdicke) aufwiesen. Hier ergeben sich deutliche Beeinträchtigungen des Prägeverhaltens, einfache technische Narben sind über die Thermoverformbarkeit der Trägerfolie, insbesondere bei dünnen Trägerfolien, darstellbar. Eine besondere Bedeutung kommt diesen Materialien bei einer weiteren Verwendung zur Herstellung von Laminaten nach Ausführungsbeispiel 6 zu.

### Ausführungsbeispiel 5

Ein Rollomaterial wurde analog zu Ausführungsbeispiel 1 erstellt, jedoch unter Verzicht auf die Rückseitenbeschichtung. Dann erfolgt die Weiterverarbeitung des Rollomaterials ausschließlich über Verkleben mit einem Verklebungssystemen, das für die eingesetzte Polyesterfolie tauglich ist, bspw. auf Basis von Cyanacrylat.

### Ausführungsbeispiel 6

Gemäß Ausführungsbeispiel 1 werden zunächst zwei Rollomaterialien getrennt hergestellt. Dabei wird zumindest bei einem Rollomaterial auf die mögliche Beschichtung der Rückseite mit einem PVC-Oberstrich verzichtet. Ferner erfolgt zunächst keine Lackierung. Zwei derartige Rollomaterialien können dann, je nach Anforderung, über mögliche Seitenkombinationen thermokaschiert werden. Abschließend erfolgt eine Lackierung der beiden Oberseiten. Schließlich wird das erhaltene Material geprägt. Eine Weiterverarbeitung kann entweder über HF-Verschweißen oder Verkleben erfolgen. Dieses Ausführungsbeispiel ermöglicht ein besseres Verschleißverhalten, ferner verbessern mehrere Trägerfolienlagen die Weiterreißfestigkeit.

### Ausführungsbeispiel 7

Ein Rollomaterial wird gemäß Ausführungsbeispiel 6 erstellt, jedoch wird zum Thermokaschieren mindestens ein Material gemäß den Ausführungsbeispielen 2, 3 oder 4 eingesetzt.

### Ausführungsbeispiel 8

Ein Rollomaterial wird gemäß Ausführungsbeispiel 6 erstellt. Als zweites Material zur Herstellung des Laminats wird jedoch ein bekanntes, mit PVC beschichtetes Gewebe eingesetzt, das dem einer üblichen Laderaumabdeckung in der Automobilanwendung gleich kommt. Es wurde festgestellt, dass eine erhebliche Verbesserung des Weiterreißverhaltens erzielt werden kann.

### Ausführungsbeispiel 9

Ein Rollomaterial gemäß Ausführungsbeispielen 1-6 wird hergestellt, wobei jedoch mindestens eine Beschichtungsschicht aufgeschäumt wird. Dazu wird beispielsweise dem in Ausführungsbeispiel 1 beschriebenen Oberstrich und/oder Haftstrich ein geeignetes Treibmittel beigefügt, üblicherweise Azodicarbonamid in einem Anteil von 0,2 bis 5,0 Gew.-%. Durch dieses Aufschäumen lässt sich eine üblicherweise niedrigere Dicke der erfindungsgemäß eingesetzten Schichtaufbauten bei weitgehender Beibehaltung des Gewichts wirksam erhöhen, wenn sich beispielsweise die üblicherweise als Vorteil genutzte Materialeigenschaft (geringe Dicke) als ungünstig erweist. Zudem können durch das Aufschäumen Geräuschdämmungsvorteile erzielt werden.

### Ausführungsbeispiel 10

Abweichend von den zuvor beschriebenen Beschichtungsverfahren mit PVC erfolgt die Beschichtung einseitig oder beidseitig auf der Trägerfolie mit alternativen Beschichtungsmaterialien und/oder Verfahren. Als besonders vorteilhaft ergibt sich beispielsweise thermoplastisches Polyurethan (TPU), das über Pulversintern aufgetragen werden kann. Ebenfalls kann beispielsweise Polyurethan über ein herkömmliches direktes Streichverfahren mit Anwendung verfügbarer High-Solid-Streichmassen durchgeführt werden.

Die in der Beschreibung und den Ansprüchen offenbarten Merkmale können sowohl einzeln als auch in beliebiger Kombination zur Verwirklichung der Erfindung in unterschiedlichen Ausführungsformen wesentlich sein.

## Patentansprüche

1. Verwendung eines lichtundurchlässigen Schichtaufbaus aus zumindest einem, bevorzugt im wesentlichen glatten Träger aus einer thermoplastischen Kunststofffolie, zumindest einem auf zumindest einer Seite des Trägers aufgetragenen Haftstrich, zumindest einem Oberstrich auf dem Haftstrich und optional zumindest einer auf den Oberstrich aufgetragenen Lackschicht als Rollomaterial für eine Laderaumabdeckung von Fahrzeugen, wobei der Oberstrich 30-60 Gew.-% PVC, 25-55 Gew.-% Weichmacher, 0,5-7 Gew.-% Stabilisator, 2-15 Gew.% Pigmente und optional 0-20 Gew.-% Flammschutzmittel, Füllstoffe und weitere Hilfsstoffe umfasst und der Haftstrich 30-60 Gew.-% PVC, 25-55 Gew.-% Weichmacher, 1-15 Gew.% eines Haftvermittlers aus vorpolymerisierten Isocyanaten oder einem Reaktionsprodukt von Isocyanaten mit zumindest difunktionellen Polyolen mit verbleibenden Isocyanatgruppen, 0,5-7,0 Gew.-% Stabilisator und optional Pigmente, Flammschutzmittel, Füllstoffe und weitere Hilfsstoffe umfasst.

2. Verwendung nach Anspruch 1, **dadurch gekennzeichnet, dass** die thermoplastische Kunststofffolie ausgewählt wird aus Polyesterfolie, Polyamidfolie und Polycarbonatfolie.

3. Verwendung nach Anspruch 2, **dadurch gekennzeichnet, dass** die Folie aus Polyethylenterephthalat ist.

4. Verwendung nach einem der vorangehenden Ansprüche, **dadurch gekennzeichnet, dass** die thermoplastische Kunststofffolie eine Dicke von 0,010-0,25 mm, bevorzugt 0,025-0,125 mm, aufweist.

5. Verwendung nach einem der vorangehenden Ansprüche, **dadurch gekennzeichnet, dass** der Oberstrich in einer Menge von 50-400 g/m², bevorzugt 50-120 g/m² aufgebracht ist.

6. Verwendung nach einem der vorangehenden Ansprüche, **dadurch gekennzeichnet, dass** das Oberstrichmaterial ausgewählt ist aus Weich-Polyvinylchlorid (Weich-PVC), Polyurethan und, optional modifiziertem, Polyolefin.

7. Verwendung nach einem der vorangehenden Ansprüche, **dadurch gekennzeichnet, dass** der Haftstrich in einer Menge von 30-90 g/m² aufgetragen ist.

8. Verwendung nach einem der vorangehenden Ansprüche, **dadurch gekennzeichnet, dass** die Lackschicht in einer Menge von 8-30 g/m² aufgetragen ist.

9. Verwendung nach einem der vorangehenden Ansprüche, **dadurch gekennzeichnet, dass** ein Haftstrich und optional darauf ein Oberstrich und/oder eine Lackschicht auf der Rückseite des Trägers aufgetragen ist bzw. sind.

10. Verwendung nach einem der vorangehenden Ansprüche, **dadurch gekennzeichnet, dass** die zumindest eine Lackschicht eine Dicke von 4-20 µm aufweist.

11. Verwendung nach einem der vorangehenden Ansprüche, **dadurch gekennzeichnet, dass** der Haftstrich und/oder der Oberstrich geschäumt sind.

12. Verwendung nach einem der vorangehenden Ansprüche, **dadurch gekennzeichnet, dass** zumindest zwei Trägerfolien über einen zumindest auf einer Trägerfolie aufgetragenen Haftstrich miteinander thermisch laminiert sind.

13. Verwendung nach einem der vorangehenden Ansprüche, **dadurch gekennzeichnet, dass** der Schichtaufbau auf zumindest einer Oberseite eine Narbung aufweist.

## Claims

1. Use of an opaque layer structure made from at least one, preferably substantially smooth carrier made from a thermoplastic film, at least one adhesive coating applied to at least one side of the carrier, at least one top coating on the adhesive coating, and optionally at least one lacquer layer applied to the top coating, as a roller material for a luggage compartment cover for vehicles, wherein the top coating comprises 30-60% by weight of PVC, 25-55% by weight of plasticiser, 0.5-7% by weight of stabiliser, 2-15% by weight of pigments and optionally 0-20% by weight of flame retardants, fillers and further auxiliaries, and the adhesive coating comprises 30-60% by weight of PVC, 25-55% by weight of plasticiser, 1-15% by weight of an adhesion promoter consisting of prepolymerised isocyanates or a reaction product of isocyanates with at least difunctional polyols having remaining isocyanate groups, 0.5-7.0% by weight of stabiliser and optionally pigments, flame retardants, fillers and further auxiliaries.

2. Use according to claim 1, **characterised in that** the thermoplastic film is selected from polyester film, polyamide film and polycarbonate film.

3. Use according to claim 2, **characterised in that** the film is made from polyethylene terephthalate.

4. Use according to one of the preceding claims, **characterised in that** the thermoplastic film has a thickness of 0.010-0.25 mm, preferably 0.025-0.125 mm.

5. Use according to one of the preceding claims, **characterised in that** the top coating is applied in a quantity of 50-400 g/m², preferably 50-120 g/m².

6. Use according to one of the preceding claims, **characterised in that** the top coating material is selected from soft polyvinyl chloride (soft PVC), polyurethane and, optionally modified, polyolefin.

7. Use according to one of the preceding claims, **characterised in that** the adhesive coating is applied in a quantity of 30-90 g/m².

8. Use according to one of the preceding claims, **characterised in that** the lacquer layer is applied in a quantity of 8-30 g/m².

9. Use according to one of the preceding claims, **characterised in that** an adhesive coating and optionally thereon a top coating and/or a lacquer layer is or are applied to the rear side of the carrier.

10. Use according to one of the preceding claims, **characterised in that** the at least one lacquer layer has a thickness of 4-20 µm.

11. Use according to one of the preceding claims, **characterised in that** the adhesive coating and/or the top coating are foamed.

12. Use according to one of the preceding claims, **characterised in that** at least two carrier films are thermally laminated to one another via an adhesive coating applied at least to one carrier film.

13. Use according to one of the preceding claims, **characterised in that** the layer structure has a grain on at least an upper side.

## Revendications

1. Utilisation d'une structure occultante en couches composée d'au moins un support, essentiellement lisse de préférence, à base d'une feuille en matière synthétique thermoplastique, d'au moins une couche d'accrochage appliquée sur au minimum une face du support, d'au moins une peinture de surface sur la couche d'accrochage, et au choix au moins une couche de laque appliquée sur la peinture de surface, en tant que matériau de store pour un recouvrement de l'espace de chargement de véhicules, la peinture de surface comportant 30-60 % en poids de PVC, 25-55 % en poids de plastifiant, 0,5-7 % en poids de stabilisant, 2-15 % en poids de pigments et au choix 0-20 % en poids de retardateur de flamme, de charges et d'autres produits auxiliaires, et la couche d'accrochage comprenant 30-60 % en poids de PVC, 25-55 % en poids de plastifiant, 1-15 % en poids d'un promoteur d'adhésion à base d'isocyanates prépolymérisés ou d'un produit de réaction d'isocyanates avec des polyols au moins bifonctionnels avec des groupes isocyanates résiduels, 0,5-7,0 % en poids de stabilisant et au choix des pigments, des retardateurs de flamme, des charges et d'autres produits auxiliaires.

2. Utilisation selon la revendication 1 **caractérisée en ce que** la feuille en matière synthétique thermoplastique est choisie parmi les feuilles en polyester, les feuilles en polyamide et les feuilles en polycarbonate.

3. Utilisation selon la revendication 2 **caractérisée en ce que** la feuille est en polyéthylène téréphtalate.

4. Utilisation selon l'une des revendications précédentes **caractérisée en ce que** la feuille en matière synthétique thermoplastique présente une épaisseur de 0,010-0,25 mm, de préférence 0,025-0,125 mm.

5. Utilisation selon l'une des revendications précédentes **caractérisée en ce que** la peinture de surface est appliquée en une quantité de 50-400 g/m², de préférence de 50-120 g/m².

6. Utilisation selon l'une des revendications précédentes **caractérisée en ce que** le matériau de la peinture de surface est choisi parmi un chlorure de polyvinyle souple (PVC souple), un polyuréthane et au choix une polyoléfine modifiée.

7. Utilisation selon l'une des revendications précédentes **caractérisée en ce que** la couche d'accrochage est appliquée en une quantité de 30-90 g/m².

8. Utilisation selon l'une des revendications précédentes **caractérisée en ce que** la couche de laque est appliquée en une quantité de 8-30 g/m².

9. Utilisation selon l'une des revendications précédentes **caractérisée en ce qu'**une couche d'accrochage et au choix une peinture de surface au-dessus et/ou une couche de laque, est, respectivement sont, appliquée(s) sur la face envers du support.

10. Utilisation selon l'une des revendications précédentes **caractérisée en ce qu'**au moins la couche de laque présente une épaisseur de 4-20 µm.

11. Utilisation selon l'une des revendications précédentes **caractérisée en ce que** la couche d'accrochage et/ou la peinture de surface sont des mousses.

12. Utilisation selon l'une des revendications précédentes **caractérisée en ce qu'**au moins deux feuilles de support sont laminées ensemble thermiquement sur au moins une couche d'accrochage appliquée sur une feuille de support.

13. Utilisation selon l'une des revendications précédentes **caractérisée en ce que** la structure en couches présente au moins une grenure sur sa face supérieure.
